(19) Europäisches Patentamt
European Patent Office
Office européen des brevets

(11) **EP 4 667 096 A1**

(12) **EUROPEAN PATENT APPLICATION**
published in accordance with Art. 153(4) EPC

(43) Date of publication:
**24.12.2025 Bulletin 2025/52**

(21) Application number: 23922970.1

(22) Date of filing: **27.12.2023**

(51) International Patent Classification (IPC):
*B01J 20/28* (2006.01)    *B01D 53/14* (2006.01)
*B01J 20/30* (2006.01)    *C01G 49/00* (2006.01)

(52) Cooperative Patent Classification (CPC):
**B01D 53/14; B01J 20/28; B01J 20/30; C01G 49/00**

(86) International application number:
**PCT/JP2023/047025**

(87) International publication number:
**WO 2024/171639 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.02.2023 JP 2023022928**

(71) Applicants:
• **Sumitomo Electric Sintered Alloy, Ltd.
Takahashi-shi,
Okayama 716-0192 (JP)**

• **Sumitomo Electric Industries, Ltd.
Osaka-shi, Osaka 541-0041 (JP)**

(72) Inventors:
• **TAKADA, Shoichi
Takahashi-shi, Okayama 716-0192 (JP)**
• **BABA, Masato
Osaka-shi, Osaka 541-0041 (JP)**
• **TAKAHASHI, Toshihiro
Osaka-shi, Osaka 541-0041 (JP)**

(74) Representative: **Boult Wade Tennant LLP
Salisbury Square House
8 Salisbury Square
London EC4Y 8AP (GB)**

(54) **CARBON DIOXIDE FIXATION MATERIAL, STRUCTURE AND METHOD FOR PRODUCING CARBON DIOXIDE FIXATION MATERIAL**

(57)    A carbon dioxide fixation material according to one embodiment of the present disclosure includes: a resin; and a carbonate compound having a purity of 80 mass% or more, wherein the carbonate compound is a metal carbonate, a metal hydrogen carbonate, or a combination thereof.

FIG.1

EP 4 667 096 A1

**Description**

TECHNICAL FIELD

The present disclosure relates to a carbon dioxide fixation material, a structural body, and a method of producing the carbon dioxide fixation material. The present application claims priority based on Japanese Patent Application No. 2023-022928 filed on February 16, 2023, the entire contents of which are incorporated herein by reference.

BACKGROUND ART

From the viewpoint of decreasing carbon dioxide discharged into an atmosphere due to human activity, a material in which carbon dioxide can be fixed has been considered (see PTL 1 and PTL 2).

CITATION LIST

PATENT LITERATURE

PTL 1: Japanese Patent Laying-Open No. 2007-031169
PTL 2: Japanese Patent Laying-Open No. 2007-075773

SUMMARY OF INVENTION

A carbon dioxide fixation material according to one embodiment of the present disclosure includes: a resin; and a carbonate compound having a purity of 80 mass% or more, wherein the carbonate compound is a metal carbonate, a metal hydrogen carbonate, or a combination thereof.

BRIEF DESCRIPTION OF DRAWINGS

[Fig. 1] Fig. 1 is a schematic view of a carbon dioxide fixation material according to one embodiment of the present disclosure.
[Fig. 2] Fig. 2 is a flowchart showing a method of producing the carbon dioxide fixation material according to one embodiment of the present disclosure.
[Fig. 3] Fig. 3 shows an electron microscope photograph image of a carbonate compound included in the carbon dioxide fixation material.

DETAILED DESCRIPTION

[Problem to be Solved by the Present Disclosure]

As one of methods of promoting carbon neutralization, it is conceivable to effectively utilize a material in which carbon dioxide is fixed. For example, the above-described material in which carbon dioxide has been fixed is recycled as a daily commodity and a material, thereby confining the carbon dioxide in these products. It cannot be said that each of the materials described in PTL 1 and PTL 2 is sufficient in terms of efficient confinement of carbon dioxide.
The present disclosure has been made in view of the above circumstance, and has an object to provide a carbon dioxide fixation material in which carbon dioxide can be efficiently confined.

[Advantageous Effect of the Present Disclosure]

In the carbon dioxide fixation material according to one embodiment of the present disclosure, carbon dioxide can be efficiently confined.

[Description of Embodiments]

First, embodiments of the present disclosure will be listed and described.

(1) A carbon dioxide fixation material according to one embodiment of the present disclosure includes: a resin; and a carbonate compound having a purity of 80 mass% or more, wherein the carbonate compound is a metal carbonate, a metal hydrogen carbonate, or a combination thereof.

In the carbon dioxide fixation material, the purity of the carbonate compound is increased by fixing carbon dioxide by a metal or a metal compound. More specifically, the purity of the carbonate compound is increased to 80 mass% due to bonding of a metal ion derived from a metal or metal compound and a carbonate ion or hydrogen carbonate ion generated by dissolution of the carbon dioxide. Moreover, since the resin is blended with the carbonate compound, recyclability is improved. Therefore, the carbon dioxide fixation material can efficiently confine the carbon dioxide.

(2) In (1), an average particle size of the carbonate compound may be 1 nm or more and 1000 nm or less. When the average particle size of the carbonate compound is within the above range, the carbonate compound is facilitated to be uniformly dispersed in the resin, with the result that the recyclability of the carbonate compound can be improved. Moreover, other advantages can be also provided, such as ease of imparting transparency to the carbon dioxide fixation material.

(3) In (1) or (2), a content of the carbonate compound may be 10 mass% or more. When the content of the carbonate compound is equal to or more than the lower limit, efficiency of fixing carbon dioxide can be improved.

(4) In (1) or (2), a content of the carbonate compound may be 51 mass% or more. When the content of the carbonate compound is equal to or more than the lower limit, the carbon dioxide fixation material can be used as a non-plastic (typically, ceramic). Therefore, the carbon dioxide fixation material can be facilitated to be used for a purpose of use in which high strength is required.

(5) In any of (1) to (4), a main component of the carbonate compound may be the metal carbonate. When the main component of the carbonate compound is the metal carbonate, the purity of the carbonate compound can be readily and securely increased.

(6) A structural body according to another embodiment of the present disclosure includes the carbon dioxide fixation material according to any one of (1) to (5).

Since the structural body includes the carbon dioxide fixation material, the carbon dioxide can be efficiently confined therein.

(7) A method of producing a carbon dioxide fixation material according to another embodiment of the present disclosure includes: reacting a metal ion with a carbonate ion or a hydrogen carbonate ion in a solution; and blending a resin with a carbonate compound obtained in the reacting.

Since the method of producing the carbon dioxide fixation material includes the reacting, the purity of the carbonate compound can be increased. Further, since the resin is blended with the carbonate compound in the blending, recyclability of the obtained carbon dioxide fixation material can be improved. Therefore, according to the method of producing the carbon dioxide fixation material, the carbon dioxide fixation material in which carbon dioxide can be efficiently confined can be produced.

(8) In (7), the method may further include: supplying carbon dioxide to the solution; and bubbling the solution after or in parallel with the supplying. Since the supplying and the bubbling are included, elution of the carbonate ion or the hydrogen carbonate ion into the solution can be promoted. Therefore, the metal ion and the carbonate ion or the hydrogen carbonate ion can be readily reacted with each other, and the particle size of the carbonate compound obtained in the reacting can be facilitated to be controlled to fall within a range of a certain value or less.

(9) In (7) or (8), the method may further include eluting the metal ion from a metal or a metal compound into the solution before the reacting. Since the eluting the metal ion from the metal or the metal compound into the solution is further included, the metal ion and the carbonate ion or the hydrogen carbonate ion can be readily and securely reacted with each other in the solution.

(10) In (9), an average particle size of the metal or the metal compound may be 1 $\mu$m or more and 10000 $\mu$m or less. When the average particle size of the metal or the metal compound is within the above range, the elution of the metal ion into the solution can be promoted, and the metal ion and the carbonate ion or the hydrogen carbonate ion can be reacted more readily and securely with each other in the solution.

(11) In (9) or (10), the metal or the metal compound may include iron or an iron compound as a main component. According to this configuration, the metal or the metal compound can efficiently fix the carbon dioxide while decreasing material cost.

(12) In (11), the iron or the iron compound may be derived from an iron-making dust or an iron scrap. According to this configuration, sourcing cost for the metal or the metal compound to produce the carbon dioxide fixation material can be suppressed. Moreover, since the iron-making dust or the iron scrap can be conventionally treated to be wasted, a load on the natural environment can be decreased by using such a material to produce the carbon dioxide fixation material.

In the present disclosure, the "average particle size" means a median size (D50), which is a value corresponding to a volume-based integrated distribution of 50% as calculated in accordance with JIS-Z-8819-2:2001. In the present disclosure, the "main component" means a component having the largest content on a mass basis.

[Details of Embodiments]

Hereinafter, embodiments of the present disclosure will be described in detail with reference to figures as appropriate. In the following description, the carbon dioxide fixation material may be simply referred to as a fixation material.

[Carbon Dioxide Fixation Material]

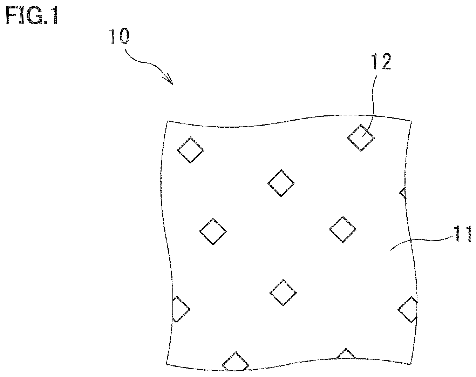

A carbon dioxide fixation material 10 of Fig. 1 includes: a resin 11; and a carbonate compound 12 having a purity of 80 mass% or more, wherein carbonate compound 12 is a metal carbonate, a metal hydrogen carbonate, or a combination thereof.

In fixation material 10, the purity of carbonate compound 12 is increased by fixing carbon dioxide by a metal or a metal compound. More specifically, the purity of carbonate compound 12 is increased to 80 mass% or more due to bonding of a metal ion derived from the metal or the metal compound and a carbonate ion or hydrogen carbonate ion generated by carbon dioxide being dissolved in a solution. Moreover, since resin 11 is blended with carbonate compound 12, recyclability is improved. Therefore, fixation material 10 can efficiently confine carbon dioxide.

<Resin>

Resin 11 is not particularly limited, and is appropriately selected in accordance with a purpose of use of fixation material 10. Resin 11 may be a thermoplastic resin or a thermosetting resin. For resin 11, one type of resin may be used solely or two or more types of resins may be mixed and used.

Examples of the thermoplastic resin include polyethylene, polypropylene, polystyrene, acrylonitrile-butadiene-styrene resin (ABS resin), acrylonitrile-styrene resin (AS resin), polyvinyl chloride, polymethylmethacrylate resin (PMMA), polyvinyl alcohol (PVA), polyvinylidene chloride, polyethylene terephthalate (PET), polybutylene terephthalate, cyclo-olefin polymer, polyamide, polyacetal, polycarbonate, polyphenylene ether, fluororesin, polysulfone, polyether sulfone, polyphenylene sulfide, polyarylate, polyamideimide, polyetherimide, polyetheretherketone, thermoplastic polyimide, liquid crystal polymer, and thermoplastic polyurethane.

Examples of the thermosetting resin include an epoxy resin, a melamine resin, an acrylic resin, a phenol resin, a silicone resin, thermosetting polyimide, a urea resin, an unsaturated polyester resin, an alkyd resin, and thermosetting polyurethane.

The content of resin 11 in fixation material 10 can be set in relation with the content of carbonate compound 12. The lower limit of the content of resin 11 in fixation material 10 may be 5 mass%, 10 mass%, 30 mass%, or 40 mass% from the viewpoint of fixing or holding carbonate compound 12. On the other hand, the upper limit of the content of resin 11 may be 90 mass%, 80 mass%, or 70 mass% from the viewpoint of improving the function of fixing carbonate compound 12 to attain a wider range of recycling purpose of fixation material 10. Moreover, the upper limit of the content of resin 11 may be 49 mass%, 40 mass%, 30 mass%, or 20 mass% from the viewpoint of increasing the content of carbonate compound 12 to attain large strength of fixation material 10. For the content of resin 11, any one of the above-described lower limit value and the above-described upper limit value can be used, or both can be used appropriately in combination.

<Carbonate Compound>

As described above, carbonate compound 12 is the metal carbonate, the metal hydrogen carbonate, or the combination thereof. Carbonate compound 12 may include the metal carbonate as a main component from the viewpoint of readily and securely increasing the purity thereof. The content of the metal carbonate in carbonate compound 12 may be 60 mass% or more, 80 mass% or more, or 100 mass%. The metal carbonate may be a carbonate of an alkali metal, a group 2 metal, or a transition metal from the viewpoint of handleability. The metal carbonate may be an iron carbonate, a magnesium carbonate, or a calcium carbonate from the viewpoint of efficiently fixing the carbon dioxide during the production process while decreasing material cost, and among these, the metal carbonate may be the iron carbonate, by which the purity of carbonate compound 12 can be more likely to be readily and securely increased. The metal hydrogen carbonate may be a hydrogen carbonate of an alkali metal, a group 2 metal, or a transition metal from the viewpoint of handleability. Moreover, the metal hydrogen carbonate may be an iron hydrogen carbonate, a magnesium hydrogen carbonate, or a calcium hydrogen carbonate, and among these, the metal hydrogen carbonate may be the iron hydrogen carbonate from the viewpoint of efficiently fixing carbon dioxide during the production process while decreasing the material cost. For each of the metal carbonate and the metal hydrogen carbonate, one type of metal carbonate or metal hydrogen carbonate may be used solely or two or more types of metal carbonates or metal hydrogen carbonates may be mixed and used.

Since carbonate compound 12 is obtained in such a manner that the metal or the metal compound in the form of a metal ion is bonded to a carbonate ion or hydrogen carbonate ion, the purity of carbonate compound 12 is 80 mass% or more. The lower limit of the purity of carbonate compound 12 may be 85 mass%, 90 mass%, 95 mass%, or 98 mass% from the viewpoint of increasing an amount of fixed carbon dioxide while suppressing an impurity from being introduced into fixation material 10. It should be noted that the purity of the carbonate compound is measured by a quantitative analysis using an X-ray diffraction method in accordance with JIS-K-0131:1996.

Carbonate compound 12 is generally in the form of particles. More specifically, when carbonate compound 12 is generated in such a manner that the metal or the metal compound in the form of the metal ion is bonded to the carbonate ion or the hydrogen carbonate ion, carbonate compound 12 is generally obtained as precipitated particles of the metal carbonate or the metal hydrogen carbonate. The average particle size of carbonate compound 12 can be controlled to be small by, for example, bubbling described later. The lower limit of the average particle size of carbonate compound 12 may be 1 nm, 10 nm, 30 nm, or 50 nm. On the other hand, the upper limit of the average particle size of carbonate compound 12 may be 1500 nm, 1200 nm, 1000 nm, or 800 nm. When the average particle size of carbonate compound 12 is equal to or more than the lower limit, it is not necessary to control the particle size of carbonate compound 12 to be excessively small, thereby decreasing production cost. On the other hand, when the average particle size of carbonate compound 12 is equal to or less than the upper limit, the purity of carbonate compound 12 is facilitated to be increased. Moreover, when the average particle size of carbonate compound 12 is equal to or less than the upper limit, carbonate compound 12 is facilitated to be uniformly mixed with resin 11, thereby improving the handleability of carbonate compound 12. That is, carbonate compound 12 can be readily recycled by, for example, producing various types of products from fixation material 10 including carbonate compound 12. Moreover, other advantages can be provided, such as ease of imparting transparency to fixation material 10. For the average particle size of carbonate compound 12, any one of the above-described lower limit value and the above-described upper limit value may be used, or both may be appropriately used in combination.

Since carbonate compound 12 can be the precipitates each having a purity of 80 mass% or more as described above, carbonate compound 12 can have a crystal structure specific to each metal carbonate or each metal hydrogen carbonate, such as a triclinic crystal structure, a monoclinic crystal structure, an orthorhombic crystal structure, a hexagonal crystal structure, a trigonal crystal structure, a tetragonal crystal structure, or a cubic crystal structure. For example, when carbonate compound 12 is the iron carbonate or the iron hydrogen carbonate, carbonate compound 12 can have the trigonal crystal structure. Moreover, when carbonate compound 12 is the iron carbonate or the iron hydrogen carbonate, the particle shape of carbonate compound 12 can be a polygonal plate shape when viewed in a plan view.

The lower limit of the content of carbonate compound 12 in fixation material 10 may be 10 mass%, 20 mass%, 30 mass%, or 40 mass% from the viewpoint of increasing the amount of fixed carbon dioxide. In this case, the upper limit of the content of carbonate compound 12 may be 95 mass%, 90 mass%, 70 mass%, or 50 mass% from the viewpoint of holding carbonate compound 12 by resin 11. Moreover, the lower limit of the content of carbonate compound 12 may be 51 mass%, 60 mass%, or 70 mass% from the viewpoint of increasing the strength of fixation material 10. When the content of carbonate compound 12 is 51 mass% or more, fixation material 10 can be used as a non-plastic (typically, ceramic). In this case, the upper limit of the content of carbonate compound 12 may be 95 mass%, 90 mass%, or 75 mass% from the viewpoint of holding carbonate compound 12 by resin 11. For the content of carbonate compound 12, any one of the above-described lower limit value and the above-described upper limit value can be used, or both can be appropriately used in combination.

Carbonate compound 12 may be disposed inside fixation material 10 or may be exposed at a surface of fixation material 10.

Fixation material 10 may be used as a resin reinforcing material. Moreover, fixation material 10 can also be used as a ceramic when the content of carbonate compound 12 is 51 mass% or more as described above.

Fixation material 10 may include a component other than resin 11 and carbonate compound 12 as appropriate in accordance with a purpose of use.

Fixation material 10 can be used as a source material for various types of products each including a resin. Examples of such products include, but are not particularly limited to, a paint application member for interior and exterior of a vehicle or house, a gear component, a pump component, a speed reducer component, an industrial robot component, a container member, a gardening member, an aerospace component, an electrical component such as a connector, a home electric appliance component, a toy, a cooking appliance, a paint, a packing material, clothes, daily commodities/household items including stationeries and glasses, and the like. Fixation material 10 may be mixed with another source material to form a mixture and the mixture may be applied to each of the above-described products, or fixation material 10 may be solely applied to each of the above-described products.

<Structural Body>

A structural body according to one embodiment of the present disclosure includes fixation material 10. More specifically, the structural body includes a cured body obtained by curing resin 11 in fixation material 10 described above.

Since the structural body includes fixation material 10, carbon dioxide can be efficiently confined therein.

The structural body may be obtained by shaping fixation material 10. Further, the structural body may be constituted only of the cured body, or may include the cured body and another member. The structural body may constitute a part of the above-described product, or may be the above-described product itself.

[Method of Producing Carbon Dioxide Fixation Material]

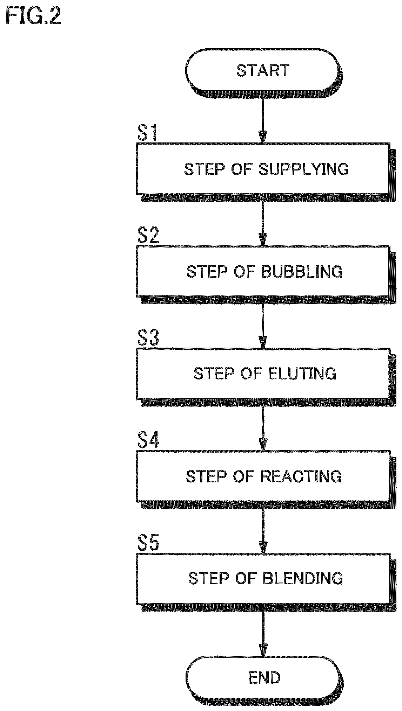

An exemplary method of producing fixation material 10 will be described with reference to Fig. 2. The method of producing the carbon dioxide fixation material in Fig. 2 includes: a step S1 of supplying carbon dioxide to a solution; a step S2 of bubbling the solution after or in parallel with step S1 of supplying; a step S3 of eluting a metal ion from a metal or a metal compound into the solution; a step S4 of reacting the metal ion with a carbonate ion or hydrogen carbonate ion in the solution; and a step S5 of blending a resin with a carbonate compound obtained in step S4 of reacting. The carbonate compound is a metal carbonate or a metal hydrogen carbonate.

Since the method of producing the fixation material includes step S4 of reacting, the purity of the carbonate compound can be increased. Further, by blending the resin with the carbonate compound in step S5 of blending, recyclability of the obtained fixation material can be improved. Therefore, according to the method of producing the fixation material, fixation material 10 in which carbon dioxide can be efficiently confined can be produced.

Moreover, since the method of producing the fixation material includes step S1 of supplying and step S2 of bubbling, the elution of the carbonate ion or the hydrogen carbonate ion into the solution can be promoted. Therefore, the metal ion and the carbonate ion or the hydrogen carbonate ion can be more readily reacted with each other, and the particle size of the carbonate compound obtained in step S4 of reacting can be facilitated to be controlled to fall within a range of a certain value or less.

<Step of Supplying>

In step S1 of supplying, the carbon dioxide may be mixed with another gas as long as the carbon dioxide can be supplied to the solution. That is, in step S1 of supplying, a mixed gas of the carbon dioxide and the other gas, such as air, may be supplied to the solution. When the carbon dioxide is supplied to the solution in step S1 of supplying, a chemical equilibrium represented by each of the following formulas [1] and [2] is caused in the solution, thereby generating the carbonate ion ($CO_3^{2-}$) or the hydrogen carbonate ion ($HCO_3^-$). It should be noted that aq means a hydrated state, and the same applies to the description below.

$$CO_2(aq) = H^+(aq) + HCO_3^-(aq) \ldots \quad [1]$$

$$HCO_3^-(aq) = H^+(aq) + CO_3^{2-}(aq) \ldots \quad [2]$$

<Step of Bubbling>

In step S2 of bubbling, the solution is bubbled after or in parallel with step S1 of supplying. Thus, the bubbling with the carbon dioxide supplied into the solution can be performed, thereby promoting the elution of the carbonate ion or the hydrogen carbonate ion into the solution. Examples of bubbling means include a configuration employing a gas bubble generation apparatus that can generate fine bubbles such as nanobubbles and microbubbles in the solution, an ultrasonic wave generation apparatus that can generate cavitation gas bubbles, or the like. Step S2 of bubbling may be performed at the same time as step S1 of supplying, and the carbon dioxide in the form of nanobubbles or microbubbles may be supplied into the solution, for example.

<Step of Eluting>

In step S3 of eluting, the metal or the metal compound is disposed to be covered with the solution, thereby eluting the metal ion into the solution. Since step S3 of eluting is included, the metal ion and the carbonate ion or the hydrogen carbonate ion can be readily and securely reacted with each other in the solution. In the method of producing the fixation material, step S3 of eluting, step S1 of supplying, and step S2 of bubbling may be performed in any order. For example, step S3 of eluting may be performed before step S1 of supplying and step S2 of bubbling, may be performed after step S1 of supplying and step S2 of bubbling, or may be performed in parallel with step S1 of supplying and step S2 of bubbling.

The metal or the metal compound may be disposed to be partially covered with the solution or may be immersed in the solution (that is, the metal or the metal compound may be entirely covered with the solution). When the metal or the metal compound is immersed in the solution, the elution of the metal ion into the solution can be facilitated. Moreover, when the metal or the metal compound is immersed in the solution, the metal ion and the carbonate ion or the hydrogen carbonate ion can be more readily reacted with each other in the solution in the below-described step S4 of reacting. It should be noted that the state in which the metal or the metal compound is covered with the solution is not limited to a configuration in which the metal or the metal compound is always covered with the solution. Moreover, the metal or the metal compound may be in contact with a member, such as a cloth, for conveying the solution and may be provided to be covered with the solution conveyed via the member.

The metal may be an alkali metal, a group 2 metal, a transition metal, or an alloy including them, and may be iron, magnesium, or calcium. Examples of the metal compound include oxides and hydroxides of the above-described metals. The metal may be iron, magnesium, or calcium from the viewpoint of efficiently fixing carbon dioxide while decreasing the material cost, and among these, the metal may be iron, by which the purity of the carbonate compound is readily and securely improved. From the same viewpoint as described above, the metal compound may be a compound of iron, magnesium, or calcium, and among these, the metal compound may be the iron compound. The compound of iron, magnesium or calcium may be an oxide or hydroxide thereof, and may be, for example, iron oxide or iron hydroxide. For each of the metal or the metal compound, one type of metal or metal compound may be used solely or two or more types of metals or metal compounds may be mixed and used.

The metal or the metal compound may include the iron or the iron compound as a main component. According to this configuration, the metal or the metal compound can more efficiently fix carbon dioxide while decreasing the material cost. The total content of the iron and the iron compound in the metal or the metal compound may be 60 mass% or more, 80 mass% or more, or 100 mass%.

The metal or the metal compound, more specifically, the iron or the iron compound, may be derived from an iron-making dust or an iron scrap. Examples of the iron-making dust include a scale generated by cutting an iron material. By using the metal or the metal compound each derived from the iron-making dust or the iron scrap, sourcing cost for the metal or the metal compound to produce the fixation material can be suppressed. Moreover, since the iron-making dust or the iron scrap can be conventionally treated to be wasted, a load on the natural environment can be decreased by using such a material to produce the fixation material.

The metal or the metal compound may be in the form of a lump or in the form of particles. The shape and size of the metal or the metal compound can be appropriately adjusted in accordance with a condition for producing the fixation material.

The lower limit of the average particle size of the metal or the metal compound may be 1 $\mu$m, 10 $\mu$m, 20 $\mu$m, 30 $\mu$m, or 40 $\mu$m from the viewpoint of facilitating the elution of the metal ion into the solution. On the other hand, the upper limit of the average particle size of the metal or the metal compound may be 10000 $\mu$m, 5000 $\mu$m, 3000 $\mu$m, 1000 $\mu$m, or 500 $\mu$m. The upper limit of the average particle size of the metal or the metal compound may be 150 $\mu$m, 120 $\mu$m, or 100 $\mu$m. When the average particle size is equal to or more than the lower limit, cost required to control the particle size can be suppressed from being increased. When the average particle size is equal to or less than the upper limit, the elution of the metal ion into the solution is promoted, with the result that the metal ion and the carbonate ion or the hydrogen carbonate ion can be readily and securely reacted with each other in the solution. For the average particle size of the metal or the metal compound, any one of the above-described lower limit value and the above-described upper limit value may be used, or both may be appropriately used in combination.

<Step of Reacting>

In step S4 of reacting, the metal ion is reacted with the carbonate ion or the hydrogen carbonate ion generated as in the above-described formulas [1] and [2] in step S1 of supplying. In step S4 of reacting, the carbon dioxide (carbonate ion or hydrogen carbonate ion) dissolved in the solution is fixed as the metal carbonate or the metal hydrogen carbonate. Hereinafter, in an exemplary case where the metal ion is an iron ion, a magnesium ion, or a calcium ion, the reaction between the metal ion and the carbonate ion or the hydrogen carbonate ion is represented by the following formulas [3] and [4]. In each of the following formulas [3] and [4], M represents an iron atom, a magnesium atom or a calcium atom, and $M^{2+}$ represents a divalent iron ion, a divalent magnesium ion or a divalent calcium ion.

$$M^{2+}(aq)+CO_3^{2-}(aq)=MCO_3(aq) \text{ ...} \qquad [3]$$

$$M^{2+}(aq)+2HCO_3^{-}(aq)=M(HCO_3)_2(aq) \text{ ..} \qquad [4]$$

In step S4 of reacting, the temperature of the solution including the metal ion and the carbonate ion or the hydrogen carbonate ion can be appropriately adjusted in accordance with the type of the metal ion. When the metal ion is the iron ion, the temperature of the solution may be 50°C or more and 100°C or less, 60°C or more and 90°C or less, or 80°C or more and 90°C or less from the viewpoint of promoting the reaction between the metal ion and the carbonate ion or the hydrogen carbonate ion.

<Solution>

The solution used in the method of producing the fixation material includes water as a solvent. The following describes a preferable configuration of the solution for promoting the reaction between the metal ion and the carbonate ion or the hydrogen carbonate ion. In particular, the following describes a case where the metal or the metal compound is iron, magnesium or calcium, or an oxide or hydroxide of iron, magnesium or calcium.

The upper limit of the pH of the solution may be 6, 5, 4, 3, 2.5, 2, or 1.5 from the viewpoint of readily increasing the divalent metal ion in the solution. The lower limit of the pH of the solution is not particularly limited, but may be 0, for example.

The solution may include a dissolution promoting agent for promoting the elution of the carbonate ion or the hydrogen carbonate ion, may include a pH buffering agent, may include a salt for lowering the pH of the solution, may include a carbonation promoting agent for promoting the reaction between the metal ion and the carbonate ion or the hydrogen carbonate ion, and may include a solution conditioning agent for increasing an elution amount of the divalent metal ion in the solution.

Examples of the dissolution promoting agent include carbonic anhydrase. The carbonic anhydrase promotes generation of the hydrogen carbonate ion ($HCO_3^-$) in the above formula (1). When the solution includes the dissolution promoting agent, the amount of the carbonate ion or the hydrogen carbonate ion in the solution is facilitated to be increased. Therefore, the efficiency of fixing the carbonate ion or the hydrogen carbonate ion can be improved.

The pH buffering agent (buffer) facilitates to maintain the pH of the solution at a desired value. Examples of the pH buffering agent include sodium tartrate, sodium acetate, sodium citrate, sodium phosphate, and the like.

Examples of the salt for lowering the pH of the solution include a salt exhibiting acidity in the solution, and the like. Examples of the salt exhibiting acidity in the solution, i.e., the salt exhibiting acidity when dissolved in the solution, include sodium hydrogen sulfate, ammonium hydrogen sulfate, sodium dihydrogen phosphate, iron(II) sulfate, iron(II) chloride, and the like.

The carbonation promoting agent may be in the form of particles. The carbonation promoting agent includes a metal carbonate or a metal hydrogen carbonate as a main component. The carbonation promoting agent can serve as a seed crystal for carbonating the metal ion. That is, a crystal of metal carbonate is grown with the carbonation promoting agent serving as the seed crystal, thereby promoting the reaction between the metal ion and the carbonate ion or the hydrogen carbonate ion. Moreover, since the carbonation promoting agent serves as the seed crystal, the above-described metal or the above-described metal compound can be suppressed from being covered with the metal carbonate or the like and the elution amount of the metal ion can be suppressed from being decreased accordingly.

The carbonation promoting agent may be disposed with a space being interposed between the carbonation promoting agent and the metal or the metal compound supplied into the solution. By disposing the carbonation promoting agent in this way, the metal carbonate with the carbonation promoting agent serving as the seed crystal can be readily collected.

The solution conditioning agent may be at least one of a reducing agent, a sequestering agent, and a builder. The solution conditioning agent can suppress oxidation of the divalent metal ion in the solution. Examples of the reducing agent include polyphenols such as catechin and chlorogenic acid. Examples of the sequestering agent include citric acid, gluconic acid, and the like. The builder may be used as an auxiliary cleaning agent. Examples of the builder include carbonate, silicate, aluminosilicate, sulfate, carboxymethyl cellulose (CMC), and the like.

When the metal or the metal compound is iron, iron oxide or iron hydroxide, the pH of the solution and the potential of the metal or the metal compound in the solution may be controlled to fall within a range in which the divalent iron ion or the divalent iron hydroxide are stable in the potential-pH diagram. That is, the pH of the solution and the potential of the metal or the metal compound may be controlled so as to increase the content of the divalent iron ion or the divalent iron hydroxide in the solution. In particular, from the viewpoint of more readily generating the iron carbonate or the iron hydrogen carbonate, the pH of the solution and the potential of the metal or the metal compound may be controlled to fall within a range in which the divalent iron ion are stable in the potential-pH diagram. Examples of means for controlling the pH of the solution include the above-described pH buffering agent, the above-described salt exhibiting acidity in the solution, and the like. Examples of the means for controlling the potential of the metal or the metal compound include applying a voltage to the metal or the metal compound, and the like. Examples of means for measuring the pH in the solution include a pH indicator and the like, and examples of means for measuring the potential of the metal or the metal compound include an ORP meter and the like.

The range in which the divalent iron ion is stable in the potential-pH diagram means a range in which the pH of the solution satisfies -2 or more and 9.5 or less and the potential (E(V vs. SHE)) of the metal or the metal compound satisfies the following formulas [5], [6], and [7].

$$E < -0.218pH + 1.67 \ (4 \leq pH \leq 9.5) \ ... \ [5]$$

$$E<0.8 \ (-2\leq pH\leq 4) \ ... \ [6]$$

$$E>-0.6 \ (-2\leq pH\leq 9.5) \ ... \ [7]$$

The range in which the divalent iron hydroxide is stable in the potential-pH diagram means a range in which the pH of the solution satisfies 9.5 or more and 16 or less and the potential (E(V vs. SHE)) of the metal or the metal compound satisfies the following formulas [8] and [9].

$$E<-0.0615pH+0.285 \ ... \ [8]$$

$$E>-0.0615pH-0.0154 \ ... \ [9]$$

<Step of Blending>

In step S5 of blending, any method is employed to blend the resin with the metal carbonate or the metal hydrogen carbonate obtained in step S4 of reacting. The resin is not particularly limited, such as the thermoplastic resin and the thermosetting resin each described above with regard to fixation material 10. For the resin, one type of resin may be used solely or two or more types of resins may be mixed and used.

[Other Embodiments]

The embodiments disclosed herein are illustrative and non-restrictive in all respects. The scope of the present invention is not limited to the configurations of the above-described embodiments, is defined by the terms of the claims, and is intended to include any modifications within the scope and meaning equivalent to the terms of the claims.
In the above embodiment, the solution includes water as the solvent, but the present disclosure is not limited thereto. The solution may include, for example, an organic solvent as the solvent.
As long as the method of producing the fixation material includes step S4 of reacting and step S5 of blending, the other steps can be omitted or changed. For example, when the method of producing the fixation material includes step S2 of bubbling, the purity of the obtained carbonate compound can be readily increased. However, when the high purity of the carbonate compound is not highly requested, step S2 of bubbling can be omitted.

Examples

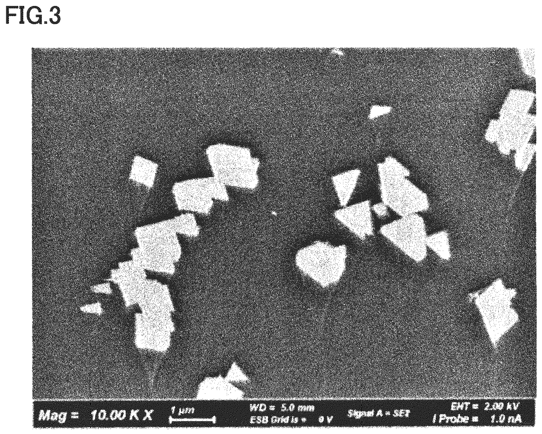

Hereinafter, the present disclosure will be described more in detail with reference to examples, but the present disclosure is not limited to the following examples.
An iron carbonate and a carbon dioxide fixation material including the iron carbonate were obtained in the following procedure.
An iron powder was placed in a reaction container composed of glass, and water was introduced to entirely immerse the iron powder therein. Thereafter, the reaction container was placed in an oil bath, and the temperature of the oil bath was adjusted to 80°C or more and 90°C or less. Further, the water in the reaction container was bubbled with humidified carbon dioxide. A bubbling amount was 200 ml/min. After maintaining this state for 4 days, about 20 g of the iron powder in the reaction container was taken out and was dried under a decreased pressure, thereby obtaining the iron carbonate. The purity of the iron carbonate as measured by the above-described quantitative analysis using the X-ray diffraction method was 91 mass%.
In order to check the shape of each of the iron carbonate particles, structure observation was performed using an electron microscope (Gemini 450 provided by Carl Zeiss) at a magnification of 10000 times. As shown in Fig. 3, the shape of each of the particles of the iron carbonate was a polygonal plate shape when viewed in a plan view. Moreover, the average particle size of the iron carbonate as measured by the above-described method was 1 nm or more and 1000 nm or less.
An epoxy resin (prepolymer) was blended with the above-described iron carbonate such that the content of the iron carbonate became 20 mass% in terms of solid content. Then, the mixture of the iron carbonate and the epoxy resin was cured in a state in which the iron carbonate was uniformly dispersed, thereby obtaining a solidified carbon dioxide fixation material. Also when the content of the iron carbonate was changed to 40 mass%, 60 mass%, and 80 mass%, solidified carbon dioxide fixation materials were obtained in the same procedure.

REFERENCE SIGNS LIST

10 carbon dioxide fixation material
11 resin
12 carbonate compound

**Claims**

1. A carbon dioxide fixation material comprising:

   a resin; and
   a carbonate compound having a purity of 80 mass% or more, wherein
   the carbonate compound is a metal carbonate, a metal hydrogen carbonate, or a combination thereof.

2. The carbon dioxide fixation material according to claim 1, wherein an average particle size of the carbonate compound is 1 nm or more and 1000 nm or less.

3. The carbon dioxide fixation material according to claim 1 or 2, wherein a content of the carbonate compound is 10 mass% or more.

4. The carbon dioxide fixation material according to claim 1 or 2, wherein a content of the carbonate compound is 51 mass% or more.

5. The carbon dioxide fixation material according to any one of claims 1 to 4, wherein a main component of the carbonate compound is the metal carbonate.

6. A structural body comprising the carbon dioxide fixation material according to any one of claims 1 to 5.

7. A method of producing a carbon dioxide fixation material, the method comprising:

   reacting a metal ion with a carbonate ion or a hydrogen carbonate ion in a solution; and
   blending a resin with a carbonate compound obtained in the reacting.

8. The method of producing the carbon dioxide fixation material according to claim 7, further comprising:

   supplying carbon dioxide to the solution; and
   bubbling the solution after or in parallel with the supplying.

9. The method of producing the carbon dioxide fixation material according to claim 7 or 8, further comprising eluting the metal ion from a metal or a metal compound into the solution before the reacting.

10. The method of producing the carbon dioxide fixation material according to claim 9, wherein an average particle size of the metal or the metal compound is 1 $\mu$m or more and 10000 $\mu$m or less.

11. The method of producing the carbon dioxide fixation material according to claim 9 or 10, wherein the metal or the metal compound includes iron or an iron compound as a main component.

12. The method of producing the carbon dioxide fixation material according to claim 11, wherein the iron or the iron compound is derived from an iron-making dust or an iron scrap.

FIG.1

FIG.2

FIG.3

## INTERNATIONAL SEARCH REPORT

| | International application No. |
|---|---|
| | **PCT/JP2023/047025** |

**A. CLASSIFICATION OF SUBJECT MATTER**

**B01J 20/28**(2006.01)i; **B01D 53/14**(2006.01)i; **B01J 20/30**(2006.01)i; **C01G 49/00**(2006.01)i
FI: B01J20/28 Z; C01G49/00 K; C01G49/00 Z; B01J20/30; B01D53/14 200

According to International Patent Classification (IPC) or to both national classification and IPC

**B. FIELDS SEARCHED**

Minimum documentation searched (classification system followed by classification symbols)

B01J20/28; B01D53/14; B01J20/30; C01G49/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-038181 A (NIPPON STEEL CORPORATION) 21 February 2008 (2008-02-21) | 1-12 |
| A | JP 2011-236059 A (RI, Kinzo) 24 November 2011 (2011-11-24) | 1-12 |
| A | WO 2021/261410 A1 (UNIVERISTY OF WASEDA) 30 December 2021 (2021-12-30) | 1-12 |
| A | WO 2022/259929 A1 (TODA KOGYO CORP.) 15 December 2022 (2022-12-15) | 1-12 |
| A | JP 2007-075773 A (NATIONAL INSTITUTE FOR MATERIALS SCIENCE) 29 March 2007 (2007-03-29) | 1-12 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/047025**

| Patent document cited in search report | | | Publication date (day/month/year) | Patent family member(s) | Publication date (day/month/year) |
|---|---|---|---|---|---|
| JP | 2008-038181 | A | 21 February 2008 | (Family: none) | |
| JP | 2011-236059 | A | 24 November 2011 | (Family: none) | |
| WO | 2021/261410 | A1 | 30 December 2021 | (Family: none) | |
| WO | 2022/259929 | A1 | 15 December 2022 | (Family: none) | |
| JP | 2007-075773 | A | 29 March 2007 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023022928 A
- JP 2007031169 A
- JP 2007075773 A